# FASCICULE DE BREVET EUROPEEN

(11) **EP 3 771 662 B1**
(45) Date de publication et mention de la délivrance du brevet: **06.03.2024**
(21) Numéro de dépôt: 20188866.6
(22) Date de dépôt: 31.07.2020
(51) Int. Cl.: B65G 15/08, B65G 15/60, B65G 21/00, B65G 39/12, F16P 1/00

(54) **STATION DE SUPPORT DE CONVOYEUR À BANDE MOBILE**
STÜTZSTRUKTUR FÜR EINEN MOBILEN BANDFÖRDERER
SUPPORT STATION FOR A MOBILE CONVEYOR BELT

(30) Priorité: 31.07.2019 FR 1908767
(43) Date de publication de la demande: 03.02.2021
(73) Titulaire: Brunone, René, 27950 Saint Marcel (FR)
(72) Inventeur: Brunone, René, 27950 Saint Marcel (FR)
(74) Mandataire: Lavoix

(56) Documents cités:
- EP-A1- 1 847 486
- DE-C1- 3 940 786
- US-A1- 2007 295 583
- US-A1- 2012 227 232

## Description

La présente invention concerne une station de support de convoyeur à bande mobile, apte à déplacer une bande dans une direction longitudinale, du type comprenant : au moins un berceau de guidage de bande, le berceau comportant au moins un rouleau de guidage ; un châssis de support, le ou chaque rouleau de guidage étant mobile en rotation par rapport audit châssis autour d'un premier axe perpendiculaire à la direction longitudinale ; et au moins une protection anti-coincement, comportant au moins un profilé, le ou chaque profilé étant associé au ou à l'un des rouleaux de guidage ; le ou chaque profilé étant disposé le long du rouleau associé ; le ou chaque profilé comprenant un bord frontal, s'étendant de manière sensiblement perpendiculaire à la direction longitudinale.

Un tel convoyeur, décrit par exemple dans le document FR2900139 au nom du Demandeur, est notamment utilisé pour le transport de matériaux en vrac. La protection anti-coincement a notamment pour but d'empêcher un objet, tel qu'un vêtement ou un membre d'un opérateur, de s'engager entre la bande mobile et un rouleau de la station de support.

Un tel convoyeur nécessite des opérations périodiques de maintenance, afin d'entretenir ou de remplacer les rouleaux des stations de support. De telles opérations de maintenance nécessitent notamment de soulever la bande mobile, afin de disposer de l'espace nécessaire pour accéder aux rouleaux ou pour les démonter du châssis.

Le document US 2012/227232 A1 divulgue un procédé de maintenance d'un convoyeur selon le préambule de la revendication 1 et un convoyeur à bande mobile selon le préambule de la revendication 3.

La présente invention propose un procédé de maintenance d'un convoyeur selon la revendication 1 et un convoyeur à bande mobile selon la revendication 3. Les modes de réalisation préférés de l'invention ressortent des revendications dépendantes.

L'invention sera mieux comprise à la lecture de la description qui va suivre, donnée uniquement à titre d'exemple non limitatif et faite en se référant aux dessins sur lesquels :
- [Fig 1] la figure 1 est une vue schématique latérale d'un convoyeur à bande mobile selon un mode de réalisation de l'invention, dans une première configuration ;
- [Fig 2] la figure 2 est une vue en coupe du convoyeur de la figure 1, dans la première configuration ;
- [Fig 3] la figure 3 est une vue de détail, en coupe, du convoyeur de la figure 1, dans la première configuration ; et
- [Fig 4] la figure 4 est une vue de détail, en coupe, du convoyeur de la figure 1, dans une deuxième configuration.

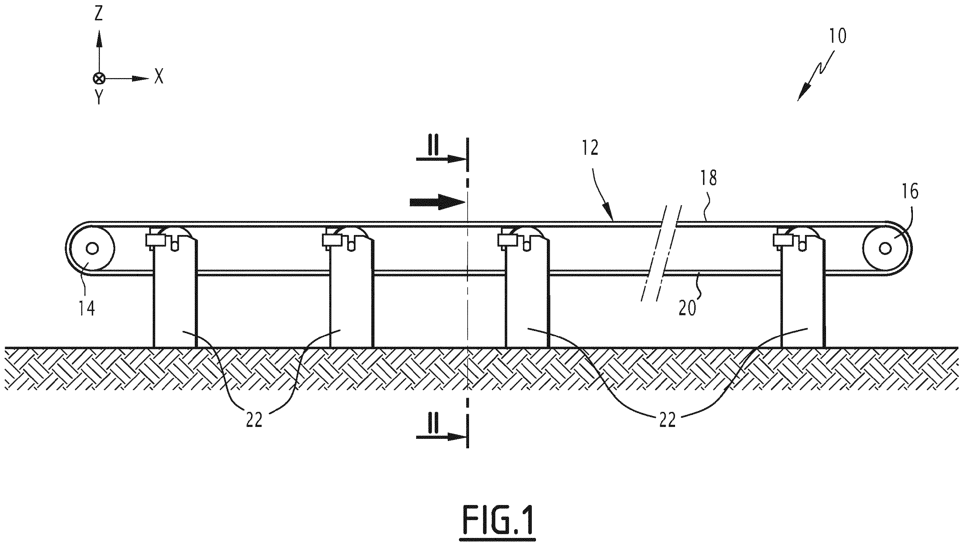

La figure 1 représente un convoyeur 10 selon un mode de réalisation de l'invention. Le convoyeur 10 est destiné par exemple au transport de minerais issus d'une carrière.

Le convoyeur 10 comporte une bande 12 transporteuse destinée à se déplacer selon une direction longitudinale horizontale. Dans la suite de la description, on considère une base orthonormée (X, Y, Z), la direction X étant la direction longitudinale et la direction Z représentant la verticale.

La bande 12 transporteuse est repliée en boucle et engagée à ses extrémités autour de deux cylindres 14 et 16 de retournement, chacun desdits cylindres étant rotatif selon un axe parallèle à Y. L'un 14 des deux cylindres est moteur pour assurer l'entraînement de la bande 12 selon la direction X.

La boucle formée par la bande 12 transporteuse est divisée en un tronçon supérieur 18 de transport du minerai et un tronçon inférieur 20 de retour, lesdits tronçons supérieur 18 et inférieur 20 étant disposés de part et d'autre des cylindres 14, 16 selon Z. Un sens d'entraînement du tronçon supérieur 18 de la bande 12 est indiqué par une flèche sur la figure 1, le tronçon inférieur 20 étant entraîné en sens opposé.

Le convoyeur 10 comporte en outre plusieurs stations de support 22, alignées selon X et destinées à supporter et à guider le tronçon supérieur 18 de la bande transporteuse 12. Dans le mode de réalisation représenté, les stations de support 22 sont toutes identiques.

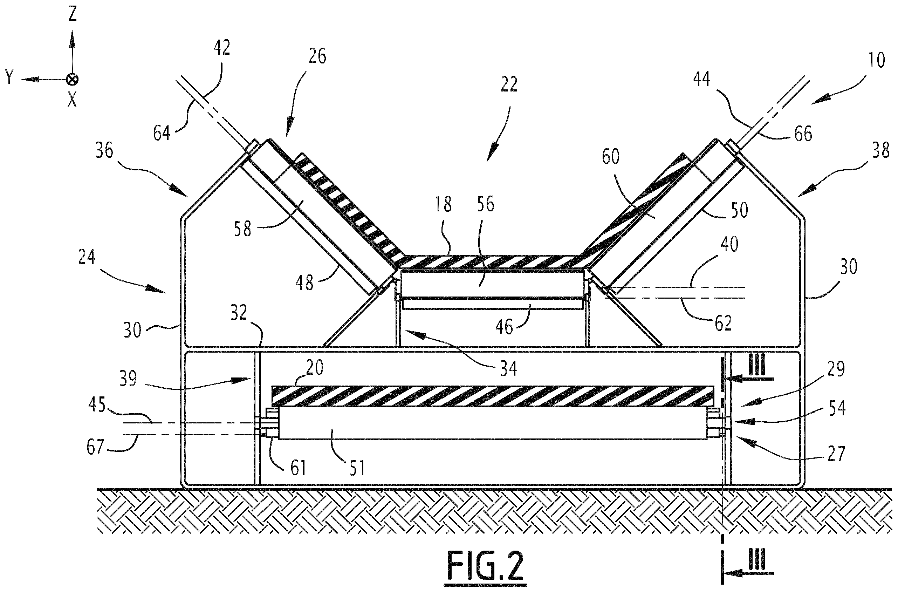

Une station de support 22 est notamment visible sur la figure 2. Ladite station de support 22 comporte un châssis 24, au moins un berceau de guidage 26, 27 et au moins une protection anti-coincement 28, 29.

Le châssis 24 comprend notamment deux montants 30 sensiblement verticaux et disposés de part et d'autre de la bande 12 selon Y. Le châssis 24 comprend également au moins une poutre transversale 32, s'étendant selon Y et reliant les montants 30. Les tronçons supérieur 18 et inférieur 20 de la bande sont disposés de part et d'autre de la poutre transversale 32 selon Z.

Le châssis 24 comprend également au moins un support 34, 36, 38, 39 de rouleau, disposé au-dessus de la poutre transversale 32. Le ou chaque support 34, 36, 38, 39 matérialise un axe 40, 42, 44, 45 de rotation de rouleau, ledit axe étant perpendiculaire à la direction longitudinale X.

Dans le mode de réalisation représenté, le châssis 24 comprend un support central 34 et un premier 36 et un deuxième 38 supports latéraux, situés au-dessus de la poutre transversale 32. Lesdits supports latéraux 36, 38 sont disposés de part et d'autre du support central 34 selon Y. L'axe 40 de rotation de rouleau matérialisé par le support central 34 est sensiblement disposé selon Y. Chacun des axes 42, 44 de rotation de rouleau matérialisés par les premier 36 et deuxième 38 supports latéraux est incliné par rapport à l'horizontale. Les trois axes 40, 42, 44 de rotation de rouleau sont sensiblement compris dans un même plan (Y, Z).

Dans le mode de réalisation représenté, le châssis 24 comprend en outre un support inférieur 39, situé au-dessous de la poutre transversale 32. L'axe 45 de rotation de rouleau matérialisé par le support inférieur 39 est sensiblement disposé selon Y.

L'au moins un berceau de guidage 26, 27 comprend au moins un rouleau 46, 48, 50, 51 de guidage et de support du tronçon supérieur 18 ou du tronçon inférieur 20 de la bande 12. Ledit au moins un rouleau est assemblé à l'au moins un support 34, 36, 38 de rouleau du châssis 24.

Dans le mode de réalisation représenté, la station de support 22 comprend un berceau de guidage supérieur 26 du tronçon supérieur 18, ainsi qu'un berceau de guidage 27 du tronçon inférieur 20.

Le berceau de guidage supérieur 26 comprend un rouleau central 46 et un premier 48 et un deuxième 50 rouleaux latéraux, respectivement assemblés au support central 34 et au premier 36 et au deuxième 38 supports latéraux du châssis 24. Dans la suite de la description, on considère que les rouleaux central 46 et latéraux 48, 50 sont sensiblement identiques.

Les premier 48 et deuxième 50 rouleaux latéraux sont inclinés par rapport au rouleau central 46 et s'étendent sensiblement plus haut que ledit rouleau central.

Le berceau de guidage inférieur 27 comprend un rouleau inférieur 51, assemblé au support inférieur 39 du châssis 24. Le rouleau inférieur 51 présente une dimension axiale plus importante que chacun des rouleaux 46, 48, 50 du berceau de guidage supérieur 26.

Chaque rouleau 46, 48, 50, 51 est mobile en rotation par rapport au support 34, 36, 38, 39 correspondant, selon l'axe de rotation de rouleau 40, 42, 44, 45 associé.

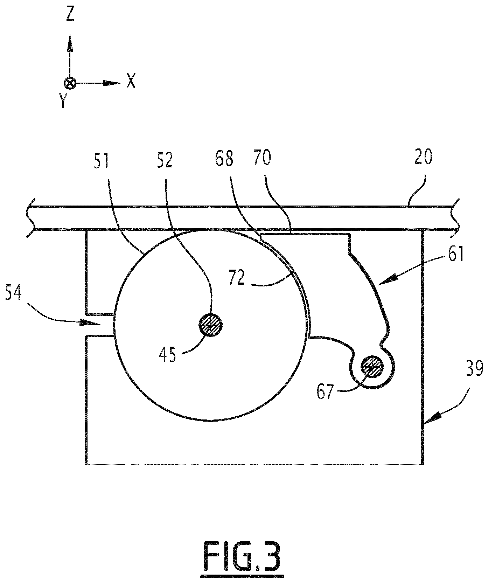

De préférence, pour faciliter les opérations de maintenance, chaque rouleau 46, 48, 50, 51 est assemblé de manière amovible au support 34, 36, 38, 39 correspondant. Par exemple, comme visible sur la figure 3 pour le support 39 et le rouleau 51 inférieurs, l'axe de rotation 45 du rouleau est matérialisé par une tige 52, solidaire du rouleau 51. Chaque extrémité de ladite tige est reçue dans une encoche 54 du support 39.

Dans le mode de réalisation représenté, chaque encoche 54 est horizontale, sensiblement disposée selon X. De préférence, la station de support 22 comporte un moyen amovible (non représenté) de maintien de la tige 52 dans les encoches 54.

Dans une configuration de fonctionnement du convoyeur 10, représentée sur les figures 1 à 3, le tronçon supérieur 18 de la bande 12 est disposé sur les rouleaux 46, 48, 50 du berceau de guidage supérieur 26 de chaque station de support 22. La configuration desdits rouleaux confère ainsi une forme d'auge audit tronçon supérieur 18, comme visible sur la figure 2.

En outre, dans ladite configuration de fonctionnement du convoyeur 10, le tronçon inférieur 20 de la bande 12 est disposé sur le rouleau inférieur 51 du berceau de guidage inférieur 27.

L'au moins une protection anti-coincement 28 est disposée en amont de l'au moins un berceau de guidage 26,27, par rapport au sens d'entraînement du tronçon 18, 20 correspondant de la bande 12.

Dans le mode de réalisation représenté, la station de support 22 comprend une protection anti-coincement supérieure 28 du tronçon supérieur 18, ainsi qu'une protection anti-coincement inférieure 29 du tronçon inférieur 20.

La protection anti-coincement supérieure 28 comprend au moins un profilé 56, 58, 60, associé à l'un 46, 48, 50 des rouleaux du berceau de guidage supérieur 26. Dans le mode de réalisation représenté, la protection anti-coincement supérieure 28 comprend un profilé central 56 et un premier 58 et un deuxième 60 profilés latéraux, respectivement associés au rouleau central 46 et aux premier 48 et deuxième 50 rouleaux latéraux.

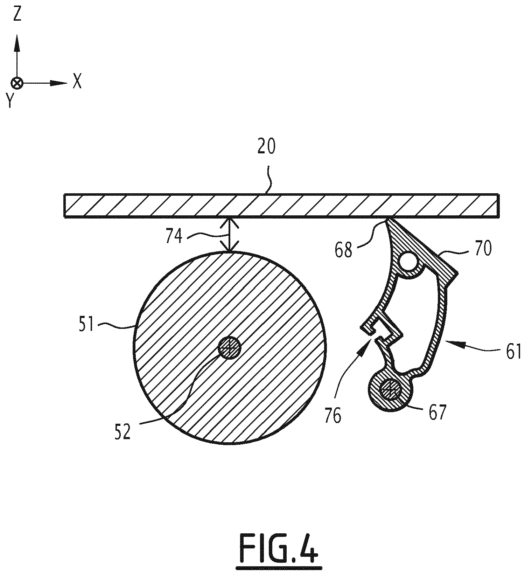

De même, la protection anti-coincement inférieure 29 comprend un profilé 61 associé au rouleau inférieur 51 du berceau de guidage inférieur 27. Ledit profilé 61 est visible en coupe sur la figure 4.

Dans la suite de la description, les profilés 56, 58, 60 et 61 seront décrits simultanément, les éléments communs étant désignés par les mêmes numéros de référence.

Le profilé 56, 58, 60, 61 est disposé le long du rouleau 46, 48, 50, 51 associé. Ledit profilé est mobile en rotation par rapport au support 34, 36, 38, 39 de rouleau correspondant, selon un axe 62, 64, 66, 67 de rotation parallèle à l'axe 40, 42, 44, 45 de rotation du rouleau associé. Dans le mode de réalisation représenté, le profilé 56, 58, 60, 61 présente une section sensiblement constante le long de son axe de rotation.

De préférence, chaque profilé 56, 58, 60, 61 présente une dimension axiale similaire à celle du rouleau 46, 48, 50, 51 associé. En particulier, le profilé 61 de la protection anti-coincement inférieure 29 présente une dimension axiale plus importante que chacun des profilés 56, 58, 60 de la protection anti-coincement supérieure 28. On considère que les profilés central 56 et latéraux 58, 60 sont sensiblement identiques.

Le profilé 56, 58, 60, 61 comporte un bord frontal 68 de forme effilée, s'étendant perpendiculairement à X. De préférence, en section, une distance entre ledit bord frontal 68 et l'axe 62, 64, 66, 67 de rotation du profilé représente une distance maximale entre ledit axe de rotation et une surface externe dudit profilé.

De part et d'autre du bord frontal 68, le profilé 56, 58, 60, 61 comporte une face supérieure 70, sensiblement plane, et une face frontale 72, de forme sensiblement concave en arc de cercle.

Dans la configuration de fonctionnement du convoyeur 10, chaque profilé 56, 58, 60, 61 est dans une première position, selon laquelle le bord frontal 68 et la face frontale 72 sont orientés vers le rouleau 46, 48, 50, 51 associé ; et la face supérieure 70 est orientée vers le tronçon 18, 20 de la bande 12 supporté par ledit rouleau 46, 48, 50, 51 associé.

La courbure de la face frontale 72 est configurée de sorte à maintenir une distance sensiblement constante et non nulle avec le rouleau, dans la première position. Ladite distance est choisie suffisamment faible pour empêcher un objet de s'introduire entre le rouleau et la bande transporteuse.

De même, dans la première position, une distance non nulle est de préférence maintenue entre la face supérieure 70 du profilé 56, 58, 60, 61 et le tronçon 18, 20 associé de la bande 12.

Le profilé 56, 58, 60, 61 est mobile autour de son axe 62, 64, 66, 67 de rotation, entre la première position des figures 1 à 3 et une deuxième position, représentée sur la figure 4 pour le profilé 61 de la protection anti-coincement inférieure 29.

Dans la deuxième position, le bord frontal 68 du profilé 56, 58, 60, 61 est éloigné du rouleau 46, 48, 50, 51 associé par rapport à la première position. En outre, le bord frontal 68 dudit profilé est en contact avec le tronçon 18, 20 supporté par ledit rouleau associé dans la première position. Ledit tronçon 18, 20 est ainsi soulevé du rouleau 46, 48, 50, 51 de sorte à ménager un espace 74 entre ledit rouleau et ledit tronçon.

De préférence, dans la deuxième position, le bord frontal 68 du profilé 56, 58, 60, 61 est disposé à la verticale de l'axe 62, 64, 66, 67 de rotation correspondant.

De préférence, le profilé 56, 58, 60, 61 est muni de moyens 76 de déplacement entre les première et deuxième positions. Le profilé 56, 58, 60, 61 comporte par exemple un orifice 76 ou une rainure d'assemblage avec un outil de type levier (non représenté), ledit outil permettant de faire pivoter ledit profilé autour de son axe.

Un procédé de maintenance du convoyeur 10 va maintenant être décrit. Lorsqu'un rouleau 46, 48, 50, 51 d'une station de support 22 a besoin d'être remplacé, la rotation du cylindre moteur 14 est arrêtée. Chaque profilé 56, 58, 60, 61 de la station de support 22 est alors dans la première position des figures 1 à 3.

Un outil de déplacement, par exemple de type levier (non représenté), est assemblé au profilé 56, 58, 60, 61 associé au rouleau à remplacer. Ledit profilé 56, 58, 60, 61 est déplacé jusqu'à la deuxième position, par rotation autour de son axe 62, 64, 66, 67. Le tronçon supérieur 18 ou inférieur 20 de la bande 12 se soulève ainsi du rouleau 46, 48, 50, 51 correspondant.

Ledit rouleau 46, 48, 50, 51 est ensuite désassemblé du support 34, 36, 38, 39 correspondant du châssis 24. En particulier, dans le mode de réalisation représenté, le rouleau 51 est désassemblé du support 39 par translation selon X, de sorte à désengager la tige 52 des encoches 54. Cette configuration présente l'avantage de nécessiter un espace 74 minimal entre la bande et le rouleau.

Le rouleau extrait est réparé ou remplacé par un rouleau neuf, puis la tige 52 dudit rouleau est assemblée aux encoches 54. Le profilé 56, 58, 60, 61 est ensuite basculé dans la première position. Le convoyeur 10 retrouve ainsi sa configuration de fonctionnement.

Selon un mode de réalisation préférentiel, avant de réparer ou de changer un rouleau 46, 48, 50 du berceau de guidage supérieur 26 d'une station de support 22, les trois profilés 56, 58, 60 de la protection anti-coincement supérieure 28 correspondante sont déplacés dans la deuxième position. L'espace ménagé entre la bande et les rouleaux est ainsi plus important, ce qui facilite le démontage du rouleau à remplacer.

Selon une variante au mode de réalisation précédemment décrit, seule l'une des protections anti-coincement supérieure 28 ou inférieure 29 comprend un ou des profilés 56, 58, 60, 61 mobiles tels que décrits ci-dessus, l'autre desdites protections anti-coincement comprenant des profilés fixes tels que décrits dans le document FR2900139. Selon cette variante, la protection anti-coincement inférieure 29 comprend de préférence un profilé 61 mobile, la protection anti-coincement supérieure comprenant des profilés fixes.

## Revendications

1. Procédé de maintenance d'un convoyeur (10) à bande mobile, ledit convoyeur comprenant au moins une station de support (22) ; ladite station de support comprenant :
- au moins un berceau (26, 27) de guidage de bande, le berceau comportant au moins un rouleau (46, 48, 50, 51) de guidage ;
- un châssis (24) de support ;
le ou chaque rouleau de guidage étant mobile en rotation par rapport audit châssis autour d'un premier axe (40, 42, 44, 45), perpendiculaire à la direction longitudinale ; et
- au moins une protection anti-coincement (28, 29), comportant au moins un profilé (56, 58, 60, 61), le ou chaque profilé étant associé au ou à l'un des rouleaux (46, 48, 50, 51) de guidage ; le ou chaque profilé étant disposé le long du rouleau associé ;
le ou chaque profilé comprenant un bord frontal (68), s'étendant de manière sensiblement perpendiculaire à la direction longitudinale ;
le ou chaque profilé (56, 58, 60, 61) étant mobile en rotation par rapport au châssis, autour d'un deuxième axe (62, 64, 66, 67) sensiblement parallèle au premier axe de rotation du rouleau associé, entre une première et une deuxième positions, le bord frontal (68) dudit profilé étant plus proche du rouleau associé dans la première position que dans la deuxième position ;
le convoyeur comprenant en outre : une bande mobile (12, 18, 20) disposée sur le ou les rouleaux de guidage (46, 48, 50, 51) de la ou des stations de support ; et un dispositif (14, 16) de déplacement de la bande mobile sur le ou les rouleaux de guidage, selon la direction longitudinale (X) ; **caractérisé en ce que** le convoyeur étant configuré de sorte que, lorsque le ou l'un des profilés (56, 58, 60, 61) de la ou d'une station de support est dans la deuxième position, le bord frontal (68) dudit profilé est en contact avec la bande mobile (12, 18, 20) et un espace (74) est ménagé entre ladite bande mobile et le rouleau de guidage (46, 48, 50, 51) associé audit profilé;
et **en ce que** le procédé comprenant les étapes suivantes :
- la bande mobile (12) étant à l'arrêt, déplacement du ou d'un profilé (56, 58, 60, 61) de la ou de l'une des stations de support entre les première et deuxième positions, de sorte à écarter la bande mobile du rouleau de guidage (46, 48, 50, 51) associé audit profilé ; puis
- maintenance dudit rouleau de guidage (46, 48, 50, 51) ; puis
- déplacement dudit profilé de la deuxième à la première position, de sorte à remettre en contact la bande mobile avec ledit rouleau de guidage.

2. Procédé de maintenance selon la revendication 1, dans lequel l'étape de maintenance du rouleau de guidage (46, 48, 50, 51) comprend la dissociation dudit rouleau et du châssis (24) de la station de support correspondante.

3. Convoyeur (10) à bande mobile, ledit convoyeur comprenant au moins une station de support (22) ; ladite station de support comprenant :
- au moins un berceau (26, 27) de guidage de bande, le berceau comportant au moins un rouleau (46, 48, 50, 51) de guidage ;
- un châssis (24) de support, le ou chaque rouleau de guidage étant mobile en rotation par rapport audit châssis autour d'un premier axe (40, 42, 44, 45), perpendiculaire à la direction longitudinale ; et
- au moins une protection anti-coincement (28, 29), comportant au moins un profilé (56, 58, 60, 61), le ou chaque profilé étant associé au ou à l'un des rouleaux (46, 48, 50, 51) de guidage ; le ou chaque profilé étant disposé le long du rouleau associé ;
le ou chaque profilé comprenant un bord frontal (68), s'étendant de manière sensiblement perpendiculaire à la direction longitudinale ;
le ou chaque profilé (56, 58, 60, 61) étant mobile en rotation par rapport au châssis, autour d'un deuxième axe (62, 64, 66, 67) sensiblement parallèle au premier axe de rotation du rouleau associé, entre une première et une deuxième positions, le bord frontal (68) dudit profilé étant plus proche du rouleau associé dans la première position que dans la deuxième position ;
le convoyeur comprenant en outre :
- une bande mobile (12, 18, 20) disposée sur le ou les rouleaux de guidage (46, 48, 50, 51) de la ou des stations de support ; et
- un dispositif (14, 16) de déplacement de la bande mobile sur le ou les rouleaux de guidage, selon la direction longitudinale (X) ; **caractérisé en ce que** le convoyeur étant configuré de sorte que, lorsque le ou l'un des profilés (56, 58, 60, 61) de la ou d'une station de support est dans la deuxième position, le bord frontal (68) dudit profilé est en contact avec la bande mobile (12, 18, 20) et un espace (74) est ménagé entre ladite bande mobile et le rouleau de guidage (46, 48, 50, 51) associé audit profilé;
et **en ce que** le convoyeur étant configuré pour la mise en oeuvre d'un procédé selon l'une des revendications 1 ou 2.

4. Convoyeur selon la revendication 3, configuré de sorte que, lorsque le ou chaque profilé (56, 58, 60, 61) d'une station de support est dans la première position, la bande mobile est en contact avec le ou chaque rouleau de guidage (46, 48, 50, 51) de ladite station.

5. Convoyeur selon l'une des revendications 3 à 4, dans lequel la bande mobile (12) forme une boucle comprenant un tronçon supérieur (18) et un tronçon inférieur (20) situés l'un au-dessus de l'autre, ledit tronçon inférieur étant disposé sur l'au moins un rouleau de guidage (51) de l'au moins une station de support (22).

6. Convoyeur selon l'une des revendications 3 à 5, dans lequel le ou chaque profilé (56, 58, 60, 61) comprend, de part et d'autre du bord frontal (68) : une face supérieure (70) sensiblement plane ; et une face frontale (72) sensiblement concave et orientée vers le rouleau (46, 48, 50, 51) associé.

7. Convoyeur selon l'une des revendications 3 à 6, dans lequel l'au moins un berceau de guidage (26) comprend un rouleau central (46) de guidage et deux rouleaux latéraux (48, 50) de guidage, les premiers axes (40, 42, 44) de rotation dudit rouleau central et desdits rouleaux latéraux étant sensiblement disposés dans un même plan (Y, Z) perpendiculaire à la direction longitudinale, le premier axe de rotation (42, 44) de chaque rouleau latéral étant incliné par rapport au premier axe de rotation (40) du rouleau central.

8. Convoyeur selon la revendication 7, dans lequel l'au moins une protection anti-coincement (28) comprend un profilé central (56), associé au rouleau central, et deux profilé latéraux (58, 60), chaque profilé latéral étant associé à l'un des deux rouleaux latéraux.

## Patentansprüche

1. Verfahren zur Wartung eines mobilen Bandförderers (10), wobei der Förderer mindestens eine Stützstruktur (22) umfasst; die Stützstruktur umfasst:
- mindestens eine Wiege (26, 27) zur Bandführung, wobei die Wiege mindestens eine Führungsrolle (46, 48, 50, 51) aufweist;
- einen Stützrahmen (24);
wobei die oder jede Führungsrolle in Bezug auf den Rahmen um eine erste Achse (40, 42, 44, 45), die senkrecht zur Längsrichtung verläuft, drehbar ist; und
- mindestens einen Einklemmschutz (28, 29), der mindestens ein Profil (56, 58, 60, 61) umfasst, wobei das oder jedes Profil mit der oder einer der Führungsrollen (46, 48, 50, 51) verbunden ist; wobei das oder jedes Profil entlang der verbundenen Rolle angeordnet ist;
das oder jedes Profil eine Vorderkante (68) umfasst, die sich im Wesentlichen senkrecht zur Längsrichtung erstreckt;
wobei das oder jedes Profil (56, 58, 60, 61) in Bezug auf den Rahmen um eine zweite Achse (62, 64, 66, 67), die im Wesentlichen parallel zur ersten Drehachse der zugehörigen Rolle verläuft, zwischen einer ersten und einer zweiten Position drehbar ist. Die Vorderkante (68) des Profils befindet sich in der ersten Position näher an der zugehörigen Rolle als in der zweiten Position;
wobei der Förderer außerdem umfasst: ein bewegliches Band (12, 18, 20), das auf der oder den Führungsrollen (46, 48, 50, 51) der Stützstruktur(en) angeordnet ist; und eine Vorrichtung (14, 16) zum Bewegen des beweglichen Bandes auf der oder den Führungsrollen in der Längsrichtung (X); **dadurch gekennzeichnet, dass** der Förderer so konfiguriert ist, dass er, wenn das oder eines der Profile (56, 58, 60, 61) der oder einer Stützstruktur in der zweiten Position ist, die Vorderkante (68) des Profils das bewegliche Band (12, 18, 20) berührt und ein Spalt (74) zwischen dem beweglichen Band und der Führungsrolle (46, 48, 50, 51), die dem Profil zugeordnet ist, gebildet wird;
und das Verfahren den folgenden Schritt umfasst:
- bei angehaltenem beweglichen Band (12), Bewegen des oder eines Profils (56, 58, 60, 61) der oder einer der Stützstrukturen zwischen der ersten und der zweiten Position, so dass das bewegliche Band von der Führungsrolle (46, 48, 50, 51), die dem Profil zugeordnet ist, wegbewegt wird; und dann
- Wartung der Führungsrolle (46, 48, 50, 51); dann
- Bewegen des Profils von der zweiten in die erste Position, um das bewegliche Band wieder mit der Führungsrolle in Kontakt zu bringen.

2. Wartungsverfahren nach Anspruch 1, wobei der Schritt der Wartung der Führungsrolle (46, 48, 50, 51) das Trennen der Rolle und des Rahmens (24) der entsprechenden Stützstruktur umfasst.

3. Mobiler Bandförderer (10), wobei der Förderer mindestens eine Stützstruktur (22) umfasst; wobei die Stützstruktur umfasst:
- mindestens eine Wiege (26, 27) zur Bandführung, wobei die Wiege mindestens eine Führungsrolle (46, 48, 50, 51) aufweist;
- einen Stützrahmen (24), wobei die oder jede Führungsrolle in Bezug auf den Rahmen um eine erste Achse (40, 42, 44, 45), die senkrecht zur Längsrichtung verläuft, drehbar ist; und
- mindestens einen Einklemmschutz (28, 29), der mindestens ein Profil (56, 58, 60, 61) umfasst, wobei das oder jedes Profil mit der oder einer der Führungsrollen (46, 48, 50, 51) verbunden ist; wobei das oder jedes Profil entlang der verbundenen Rolle angeordnet ist;
das oder jedes Profil mit einer Vorderkante (68), die sich im Wesentlichen senkrecht zur Längsrichtung erstreckt;
wobei das oder jedes Profil (56, 58, 60, 61) in Bezug auf den Rahmen um eine zweite Achse (62, 64, 66, 67), die im Wesentlichen parallel zur ersten Drehachse der zugehörigen Rolle verläuft, zwischen einer ersten und einer zweiten Position drehbar ist. Die Vorderkante (68) des Profils befindet sich in der ersten Position näher an der zugehörigen Rolle als in der zweiten Position;
der Förderer ferner umfassend:
- ein bewegliches Band (12, 18, 20), das auf der/den Führungsrolle(n) (46, 48, 50, 51) der Stützstruktur(en) angeordnet ist; und
- eine Vorrichtung (14, 16) zum Bewegen des beweglichen Bandes auf der Führungsrolle oder den Führungsrollen in der Längsrichtung (X); **dadurch gekennzeichnet, dass** der Förderer so konfiguriert ist, dass, wenn das oder eines der Profile (56, 58, 60, 61) der oder einer der Führungsrollen in der zweiten Position ist, die Vorderkante (68) des Profils in Kontakt mit dem beweglichen Band (12, 18, 20) ist und ein Spalt (74) zwischen dem beweglichen Band und der Führungsrolle (46, 48, 50, 51), die dem Profil zugeordnet ist, vorhanden ist;
und dadurch, dass der Förderer für die Durchführung eines Verfahrens nach einem der Ansprüche 1 oder 2 konfiguriert ist.

4. Förderer nach Anspruch 3, der so konfiguriert ist, dass, wenn sich das oder jedes Profil (56, 58, 60, 61) einer Stützstruktur in der ersten Position befindet, das bewegliche Band mit der oder jeder Führungsrolle (46, 48, 50, 51) dieser Struktur in Kontakt steht.

5. Förderer nach einem der Ansprüche 3 bis 4, wobei das bewegliche Band (12) eine Schleife bildet, die einen oberen Abschnitt (18) und einen unteren Abschnitt (20) umfasst, die übereinander angeordnet sind, wobei der untere Abschnitt an der mindestens einen Führungsrolle (51) der mindestens einen Stützstruktur (22) angeordnet ist.

6. Förderer nach einem der Ansprüche 3 bis 5, wobei das oder jedes Profil (56, 58, 60, 61) auf beiden Seiten der Vorderkante (68) Folgendes umfasst: eine im Wesentlichen ebene Oberseite (70); und eine im Wesentlichen konkave Vorderseite (72), die zur zugehörigen Rolle (46, 48, 50, 51) hin ausgerichtet ist.

7. Förderer nach einem der Ansprüche 3 bis 6, wobei die mindestens eine Führungswiege (26) eine mittlere Führungsrolle (46) und zwei seitliche Führungsrollen (48, 50) aufweist, wobei die ersten Drehachsen (40, 42, 44) der mittleren Rolle und der seitlichen Rollen im Wesentlichen in einer gleichen Ebene (Y, Z) senkrecht zur Längsrichtung angeordnet sind, wobei die erste Drehachse (42, 44) jeder Seitenrolle in Bezug auf die erste Drehachse (40) der mittleren Rolle geneigt ist.

8. Förderer nach Anspruch 7, wobei der mindestens eine Einklemmschutz (28) ein Mittelprofil (56), das mit der mittleren Rolle verbunden ist, und zwei Seitenprofile (58, 60) umfasst, wobei jedes Seitenprofil mit einer der beiden Seitenrollen verbunden ist.

## Claims

1. A method of maintaining a moving belt conveyor (10), said conveyor comprising at least one support station (22); said support station comprising:
- at least one web guide cradle (26, 27), the cradle comprising at least one guide roller (46, 48, 50, 51);
- a support frame (24);
the or each guide roller being rotatable relative to said chassis about a first axis (40, 42, 44, 45) perpendicular to the longitudinal direction; and
- at least one anti-jamming protection (28, 29), comprising at least one profile (56, 58, 60, 61), the or each profile being associated with the or one of the guide rollers (46, 48, 50, 51); the or each profile being arranged along the associated roller;
the or each profile comprising a front edge (68) extending substantially perpendicular to the longitudinal direction;
the or each profile (56, 58, 60, 61) being able to rotate relative to the frame, about a second axis (62, 64, 66, 67) substantially parallel to the first axis of rotation of the associated roller between a first and a second position, the front edge (68) of said section being closer to the associated roller in the first position than in the second position;
the conveyor further comprising: a moving belt (12, 18, 20) arranged on the guide roller or rollers (46, 48, 50, 51) of the support station or stations; and a device (14, 16) for moving the moving belt on the guide roller or rollers in the longitudinal direction (X); **characterised in that** the conveyor is configured so that, when the or one of the profiles (56, 58, 60, 61) of the or of a support station is in the second position, the front edge (68) of the said profile is in contact with the moving belt (12, 18, 20) and a gap (74) is formed between the said moving belt and the guide roller (46, 48, 50, 51) associated with the said profile;
and **in that** the process involving the following steps:
- with the moving belt (12) stationary, moving the or a profile (56, 58, 60, 61) of the or one of the support stations between the first and second positions, so as to move the moving belt away from the guide roller (46, 48, 50, 51) associated with the said profile; then
- maintenance of said guide roller (46, 48, 50, 51); then
- moving said profile from the second to the first position, so as to bring the moving belt back into contact with said guide roller.

2. A maintenance method as claimed in claim 1, wherein the step of maintaining the guide roller (46, 48, 50, 51) comprises disassociating said roller from the frame (24) of the corresponding support station.

3. A moving belt conveyor (10), said conveyor comprising at least one support station (22); said support station comprising:
- at least one web guide cradle (26, 27), the cradle comprising at least one guide roller (46, 48, 50, 51);
- a support frame (24), the or each guide roller being rotatable relative to said frame about a first axis (40, 42, 44, 45) perpendicular to the longitudinal direction; and
- at least one anti-jamming protection (28, 29), comprising at least one profile (56, 58, 60, 61), the or each profile being associated with the or one of the guide rollers (46, 48, 50, 51); the or each profile being arranged along the associated roller;
the or each profile comprising a front edge (68) extending substantially perpendicular to the longitudinal direction;
the or each profile (56, 58, 60, 61) being able to rotate relative to the frame, about a second axis (62, 64, 66, 67) substantially parallel to the first axis of rotation of the associated roller between a first and a second position, the front edge (68) of said section being closer to the associated roller in the first position than in the second position;
the conveyor further comprising:
- a moving belt (12, 18, 20) arranged on the guide roller(s) (46, 48, 50, 51) of the support station(s); and
- a device (14, 16) for moving the moving belt over the guide roller or rollers, in the longitudinal direction (X);**characterised in that** the conveyor being configured so that, when the or one of the profiles (56, 58, 60, 61) of the or of a support station is in the second position, the front edge (68) of the said profile is in contact with the moving belt (12, 18, 20) and a gap (74) is formed between said moving belt and the guide roller (46, 48, 50, 51) associated with said profile;
and **in that** the conveyor is configured to implement a process according to one of claims 1 or 2.

4. A conveyor as claimed in claim 3, configured so that, when the or each profile (56, 58, 60, 61) of a support station is in the first position, the moving belt is in contact with the or each guide roller (46, 48, 50, 51) of said station.

5. A conveyor according to one of claims 3 to 4, in which the moving belt (12) forms a loop comprising an upper section (18) and a lower section (20) located one above the other, said lower section being arranged on the at least one guide roller (51) of the at least one support station (22).

6. A conveyor according to one of claims 3 to 5, in which the or each profile (56, 58, 60, 61) comprises, on either side of the front edge (68): a substantially flat upper face (70); and a substantially concave front face (72) oriented towards the associated roller (46, 48, 50, 51).

7. A conveyor according to one of claims 3 to 6, in which at least one guide cradle (26) consists of a central guide roller (46) and two guide lateral rollers (48, 50), the first axes (40, 42, 44) rotation of the central roller and the lateral rollers being substantially in the same plane (Y, Z) perpendicular to the longitudinal direction, with the first axis of rotation (42, 44) of each lateral roller being inclined to the first axis of rotation (40) of the central roller.

8. A conveyor as claimed in claim 7, wherein the at least one anti-trapping guard (28) comprises a central profile (56), associated with the central roller, and two lateral profiles (58, 60), each lateral profile being associated with one of the two lateral rollers.
